# EUROPÄISCHE PATENTSCHRIFT

(11) **EP 1 408 801 B1**
(45) Veröffentlichungstag und Bekanntmachung des Hinweises auf die Patenterteilung: **04.05.2005**
(21) Anmeldenummer: 02779139.1
(22) Anmeldetag: 07.10.2002
(51) Int. Cl.: A47G 29/14, G07C 9/00, G07F 17/12

(54) **VERFAHREN ZUR STEUERUNG VON ELEKTRONISCHEN PAKETFACHANLAGEN**
METHOD FOR CONTROLLING ELECTRONIC PARCEL COMPARTMENT SYSTEMS
PROCEDE DE COMMANDE DE DISPOSITIFS ELECTRONIQUES DE COMPARTIMENT POUR COLIS

(30) Priorität: 09.10.2001 DE 10149619
(43) Veröffentlichungstag der Anmeldung: 21.04.2004
(73) Patentinhaber: Deutsche Post AG, 53113 Bonn (DE)
(72) Erfinder: MAYER, Boris, 53113 Bonn (DE); GÜNTHER, Clemens, 53175 Bonn (DE)
(74) Vertreter: Jostarndt, Hans-Dieter, Dr. Dipl.-Phys.
(86) Internationale Anmeldenummer: PCT/DE2002/003758
(87) Internationale Veröffentlichungsnummer: WO 2003/032788

(56) Entgegenhaltungen:
- WO-A-00/51750
- WO-A-01/63494
- DE-A- 10 000 830

## Beschreibung

Die Erfindung betrifft ein Verfahren zur Steuerung von elektronischen Paketfachanlagen.

Aus der internationalen Patentanmeldung WO 01/63494 A2 ist ein computergesteuertes System zur Auslieferung von Waren bekannt, bei dem eine oder mehrere Schließfachanlagen mit einem Server verbunden sind, der die Prozesse und Daten für die Bestellung von Waren, ihre Auslieferung und den Betrieb der Schließfachanlage verwaltet und bereitstellt.

Der Erfindung liegt die Aufgabe zugrunde, ein gattungsgemäßes Verfahren so zu verbessern, dass eine flexible und einfache Anpassung der elektronischen Paketfachanlage ermöglicht wird. Insbesondere soll das Verfahren eine schnelle und zuverlässige Änderung von Betriebsparametern der Paketfachanlage ermöglichen.

Erfindungsgemäß wird diese Aufgabe dadurch gelöst, dass ein Verfahren zur Steuerung von elektronischen Paketfachanlagen so durchgeführt wird, dass Daten für die Steuerung der elektronischen Paketfachanlagen in einem Server gespeichert und in Steuerbefehle für die Steuerung der Paketfachanlagen umgewandelt werden, dass im Bereich eines Servers überprüft wird, ob Änderungen von in dem Server gespeicherten Daten vorliegen, und dass die Steuerbefehle über eine Schnittstelle an die Paketfachanlagen übertragen werden, sobald ein vorgebbares Ausmaß von Änderungen des Datenbestandes aufgetreten ist.

Die Erfindung beinhaltet eine Zentralisierung und Vereinheitlichung von Steuerbefehlen für die Paketfachanlagen.

Die für diese Zentralisierung vorgesehene Schnittstelle ermöglicht eine zeitnahe Übermittlung der Steuerbefehle an die Paketfachanlagen.

Außerdem wird es durch die Erfindung möglich, einheitliche Betriebsbedingungen für eine Vielzahl von elektronischen Paketfachanlagen zu erzielen und diese Betriebsbedingungen kurzfristig verändern zu können.

Die dynamische Änderung kann dabei sowohl Zugriffsrechte einzelner Benutzer oder Benutzergruppen als auch Betriebsparameter der elektronischen Paketfachanlage beinhalten.

In der Ausführungsform, in der die Steuerbefehle Betriebsparameter der elektronischen Paketfachanlage verändern, kann vorzugsweise die gesamte Konfiguration der Paketfachanlagen geändert werden.

Hierdurch ist es beispielsweise möglich, Abholzeiträume für einzelne Benutzer und/oder Benutzergruppen zentral zu verändern.

Ferner ist es vorteilhaft, dass die Steuerbefehle derart in eine im Bereich der elektronischen Paketfachanlage befindliche elektronische Steuereinheit eingreifen, dass die Auswahl von zur Verfügung stehenden Betriebsfunktionen verändert wird.

Ferner ist es zweckmäßig, dass die Steuerbefehle für die Steuerung der Paketfachanlagen Eigenschaften der graphischen Benutzeroberfläche verändern.

Vorteilhafterweise wird diese Ausführungsform der Erfindung so durchgeführt, dass die Auswahlmöglichkeit von Menüpunkten der graphischen Benutzeroberfläche durch die Steuerbefehle geändert wird.

Um eine besonders flexible und zuverlässige Übermittlung der Steuerbefehle zu erzielen, ist es zweckmäßig, dass die Steuerbefehle entsprechend einem XML-Protokoll übermittelt werden.

Grundsätzlich ist es möglich, dass eine Übermittlung von Steuerbefehlen zwischen der Paketfachanlage und dem Server push- oder pull-orientiert erfolgt.

Eine vorteilhafte Ausführungsform der Erfindung zeichnet sich dadurch aus, dass die elektronischen Paketfachanlagen an die Schnittstelle eine Aufforderung zur Übermittlung der Steuerbefehle senden.

Hierbei ist es zweckmäßig, dass die Aufforderung zur Übermittlung der Steuerbefehle bei Auftreten eines Ereignisses wiederholt wird.

Es ist gleichfalls zweckmäßig, dass die Aufforderung nach einem vorgebbaren Zeitintervall wiederholt wird.

Eine besonders bevorzugte Ausführungsform des Verfahrens sieht vor, dass in dem Bereich des Servers überprüft wird, ob Änderungen der in dem Server gespeicherten Daten vorliegen, und dass bei Änderungen der in dem Server gespeicherten Daten Steuerbefehle an die Paketfachanlagen übertragen werden.

Hierdurch ist es möglich, eine umfassende Übermittlung von Steuerbefehlen zu erzielen. Außerdem wird der erforderliche Datenverkehr verringert.

Zur weiteren Verringerung des Datenverkehrs ist es zweckmäßig, dass die Übertragung der Steuerbefehle erfolgt, sobald ein vorgebbares Ausmaß von Änderungen des Datenbestandes aufgetreten ist.

Ferner ist es vorteilhaft, dass auch die Paketfachanlagen Daten an den Server senden.

Für die Übermittlung der Daten von den Paketfachanlagen zu dem Server eignet sich sowohl die Schnittstelle, die die Steuerbefehle für die Paketfachanlagen an die Paketfachanlagen überträgt, als auch eine weitere Schnittstelle.

Vorteilhafterweise wandelt der Server die übermittelten Daten in Steuerbefehle für die Steuerung der Paketfachanlagen um.

Durch die dargestellten Maßnahmen kann die Zuverlässigkeit der Paketfachanlagen und des Verfahrens weiter erhöht werden. Dies gilt insbesondere deshalb, weil für den Fall des Auftauchens von Mißbrauchsfällen an einer der Paketfachanlagen die entsprechenden Daten an den Server übermittelt und anschließend in Steuerbefehle für alle Paketfachanlagen umgewandelt werden.

Gegenstand der Erfindung ist ferner eine Schnittstelle, die so gestaltet ist, dass sie einen Dateneingang zum Empfangen von Daten für die Steuerung von elektronischen Paketfachanlagen und/oder die Übermittlung von Steuerbefehlen an die Paketfachanlagen und ein Mittel zur Übertragung der Daten und/oder der Steuerbefehle an die Paketfachanlagen enthält.

Weitere Vorteile, Besonderheiten und zweckmäßige Weiterbildungen der Erfindung ergeben sich aus den Unteransprüchen und der nachfolgenden Darstellung bevorzugter. Ausführungsbeispiele.

Die nachfolgende Darstellung betrifft ein besonders bevorzugtes Ausführungsbeispiel der Erfindung, bei der eine Datenkommunikation sowohl von dem Server zu den Paketfachanlagen als auch von den Paketfachanlagen zu dem Server erfolgt.

Dieses Beispiel ist besonders bevorzugt, weil es eine noch größere Flexibilität des Verfahrens ermöglicht.

In dem Server oder in einer anderen Datenverarbeitungseinheit werden Datenereignisse ausgewertet und in Steuerbefehle umgewandelt.

In der dargestellten Ausführungsform einer besonders bevorzugten bidirektionalen Datenübertragung zwischen den Paketfachanlagen und dem Server ist es möglich, dass die Paketfachanlagen eine Absendung von Steuerbefehlen von der Paketfachanlage anfordern.

Vorzugsweise ist der eingesetzte Server ein Web-Server, der in der Lage ist, Datenübertragungsbefehle entsprechend dem http-Protokoll zu übermitteln.

Aufforderungen zur Übermittlung von Steuerbefehlen werden beispielsweise als XML-Dateien an den Server übermittelt.

Nachfolgend sind Namen und Funktionen einzelner eingesetzter Daten dargestellt.

| **Daten** | **Funktion** |
|---|---|
| UserID | Benutzername |
| AccountID | Name des Benutzer-Account |
| SecurityToken | Paßwort für die Zugangsberechtigung |
| Language | Sprache zur Übermittlung von Fehlermeldungen, diese Sprachen sind frei wählbar und umfassen beispielsweise deutsch und englisch |
| ProcessingMode (Default is MODULE) | Enthält den kodierten Modus des Einstellens oder Abholens des Paketes |
| RequestID | Identifikationsangabe der Aufforderung zur Übermittlung von Steuerbefehlen |

Vorzugsweise werden die Daten in einem geeigneten Format, beziehungsweise mit einer geeigneten Verschlüsselung übertragen, beispielsweise entsprechend der Norm ISO-8859-1. XML (W3C) erlaubt den Einsatz folgender Datentypen:
ASCII Value 0x0009 (Tab)
ASCII Value 0x000A (Newline)
ASCII Value 0x000C (Carriage Return)
ASCII Values 0x0020-0xD7FF and 0xE000-0xFFFD (Printable Characters)

Die Vorteile einer Schnittstelle, die auf vorgegebene oder vorgebbare Datentypen beschränkt ist, liegen in der universellen Einsetzbarkeit, Erweiterbarkeit und Herstellerunabhängigkeit.

## Patentansprüche

1. Verfahren zur Steuerung von elektronischen Paketfachanlagen,
**dadurch gekennzeichnet,**
**dass** Daten für die Steuerung der elektronischen Paketfachanlagen in einem Server gespeichert und in Steuerbefehle für die Steuerung der Paketfachanlagen umgewandelt werden, dass im Bereich eines Servers überprüft wird, ob Änderungen von in dem Server gespeicherten Daten vorliegen, und dass die Steuerbefehle über eine Schnittstelle an die Paketfachanlagen übertragen werden, sobald ein vorgebbares Ausmaß von Änderungen des Datenbestandes aufgetreten ist.

2. Verfahren nach Anspruch 1,
**dadurch gekennzeichnet,**
**dass** die Steuerbefehle Betriebsparameter der elektronischen Paketfachanlage verändern.

3. Verfahren nach einem oder beiden der Ansprüche 1 oder 2,
**dadurch gekennzeichnet,**
**dass** die Steuerbefehle derart in eine im Bereich der elektronischen Paketfachanlage befindliche elektronische Steuereinheit eingreifen, dass die Auswahl von zur Verfügung stehenden Betriebsfunktionen verändert wird.

4. Verfahren nach Anspruch 3,
**dadurch gekennzeichnet,**
**dass** die Veränderung der Betriebsfunktionen eine Änderung der Möglichkeit zum Öffnen von Paketfächern umfasst.

5. Verfahren nach einem oder mehreren der vorangegangenen Ansprüche,
**dadurch gekennzeichnet,**
**dass** die Steuerbefehle für die Steuerung der Paketfachanlagen Eigenschaften der graphischen Benutzeroberfläche verändern.

6. Verfahren nach Anspruch 5,
**dadurch gekennzeichnet,**
**dass** eine Auswahlmöglichkeit von Menüpunkten der graphischen Benutzeroberfläche durch die Steuerbefehle geändert wird.

7. Verfahren nach einem oder mehreren der vorangegangenen Ansprüche,
**dadurch gekennzeichnet,**
**dass** die Steuerbefehle entsprechend einem XML-Protokoll übermittelt werden.

8. Verfahren nach einem oder mehreren der vorangegangenen Ansprüche,
**dadurch gekennzeichnet,**
**dass** die elektronischen Paketfachanlagen an die Schnittstelle eine Aufforderung zur Übermittlung der Steuerbefehle senden.

9. Verfahren nach Anspruch 8,
**dadurch gekennzeichnet,**
**dass** die Aufforderung zur Übermittlung der Steuerbefehle bei Auftreten eines Ereignisses wiederholt wird.

10. Verfahren nach einem oder beiden der Ansprüche 8 oder 9,
**dadurch gekennzeichnet,**
**dass** die Aufforderung nach einem vorgebbaren Zeitintervall wiederholt wird.

11. Verfahren nach einem oder mehreren der vorangegangenen Ansprüche,
**dadurch gekennzeichnet,**
**dass** die Paketfachanlagen Daten an den Server übermitteln.

12. Verfahren nach Anspruch 11,
**dadurch gekennzeichnet,**
**dass** der Server die übermittelten Daten in Steuerbefehle für die Steuerung der Paketfachanlagen umwandelt.

## Claims

1. A method for controlling electronic parcel package compartment systems,
**characterized in that**
data for controlling the electronic parcel compartment systems is stored on a server and converted into control commands for controlling the parcel compartment systems, **in that** a checking procedure is carried out in the area of a server to see whether changes have been made in the data stored on the server and **in that** the control commands are transmitted via an interface to the parcel compartment system as soon as a predefinable number of changes have been made to the data stock.

2. The method according to Claim 1,
**characterized in that**
the control commands change operating parameters of the electronic parcel compartment system.

3. The method according to one or both of Claims 1 or 2,
**characterized in that**
the control commands act upon an electronic control unit located in the area of the electronic parcel compartment system in such a way that the selection of the available operating functions is changed.

4. The method according to Claim 3,
**characterized in that**
the change of the operating functions comprises a change in the possibility to open parcel compartments.

5. The method according to one or more of the preceding claims,
**characterized in that**
the control commands for controlling the parcel compartment systems change properties of the graphic user interface.

6. The method according to Claim 5,
**characterized in that**
a selection option of menu items of the graphic user interface is changed by the control commands.

7. The method according to one or more of the preceding claims,
**characterized in that**
the control commands are transmitted in accordance with an XML protocol.

8. The method according to one or more of the preceding claims,
**characterized in that**
the electronic parcel compartment systems send to the interface a request for the transmission of the control commands.

9. The method according to Claim 8,
**characterized in that**
the request to transmit the control commands is repeated when an event occurs.

10. The method according to one or both of Claims 8 or 9,
**characterized in that**
the request is repeated after a predefinable time interval.

11. The method according to one or more of the preceding claims,
**characterized in that**
the parcel compartment systems send data to the server.

12. The method according to Claim 13,
**characterized in that**
the server converts the transmitted data into control commands for controlling the parcel compartment systems.

## Revendications

1. Procédé pour le pilotage de dispositifs électroniques de casiers à colis,
**caractérisé en ce**
**que** des données pour le pilotage des dispositifs électroniques de casiers à colis sont stockées sur un serveur et transformées en commandes de pilotage pour le pilotage des dispositifs de casiers à colis, qu'au niveau d'un serveur il est vérifié si des modifications des données stockées sur le serveur existent, et que les commandes de pilotage sont transmises par une interface au dispositif de casiers à colis aussitôt qu'un nombre déterminé de modifications des données est constaté.

2. Procédé selon la revendication 1,
**caractérisé en ce que**
les commandes de pilotage modifient les paramètres d'exploitation du dispositif électronique de casiers à colis.

3. Procédé selon l'une ou les deux des revendications 1 ou 2,
**caractérisé en ce que**
les commandes de pilotage influent sur une unité électronique de pilotage se trouvant au niveau du dispositif électronique de pilotage de manière à ce que la sélection des fonctions d'exploitation disponibles est modifiée.

4. Procédé selon la revendication 3,
**caractérisé en ce que**
la modification des fonctions d'exploitation comprend une modification des possibilités d'ouverture de casiers à colis.

5. Procédé selon une ou plusieurs des revendications précédentes,
**caractérisé en ce que**
les commandes de pilotage pour le pilotage des dispositifs de casiers à colis modifient des propriétés de la surface graphique d'utilisateur.

6. Procédé selon la revendication 5,
**caractérisé en ce que**
une possibilité de sélectionner des points de menu dans la surface graphique d'utilisateur est modifiée par les commandes de pilotage.

7. Procédé selon une ou plusieurs des revendications précédentes,
**caractérisé en ce que**
les commandes de pilotage sont transmises selon un protocole XML.

8. Procédé selon une ou plusieurs des revendications précédentes,
**caractérisé en ce que**
les dispositifs électroniques de casiers à colis envoient une demande de transmission des commandes de pilotages à l'interface.

9. Procédé selon la revendication 8,
**caractérisé en ce que**
la demande de transmission des commandes de pilotage est répétée suite à un événement.

10. Procédé selon l'une ou les deux des revendication 8 ou 9,
**caractérisé en ce que**
la demande est répétée après un intervalle de temps ajustable.

11. Procédé selon une ou plusieurs des revendications précédentes,
**caractérisé en ce que**
les dispositifs de casiers à colis transmettent des données au serveur.

12. Procédé selon la revendication 11,
**caractérisé en ce que**
le serveur transforme les données transmises en commandes de pilotage pour le pilotage des dispositifs de casiers à colis.
